(19) **Europäisches Patentamt / European Patent Office / Office européen des brevets**

(11) **EP 4 327 451 B1**

(12) **EUROPÄISCHE PATENTSCHRIFT**

(45) Veröffentlichungstag und Bekanntmachung des Hinweises auf die Patenterteilung:
**20.08.2025   Patentblatt 2025/34**

(21) Anmeldenummer: **22715977.9**

(22) Anmeldetag: **14.03.2022**

(51) Internationale Patentklassifikation (IPC):
**E05F 15/668** *(2015.01)*   **H02P 27/04** *(2016.01)*
**H02P 29/028** *(2016.01)*

(52) Gemeinsame Patentklassifikation (CPC):
**H02P 27/047; E05F 15/668;** E05Y 2400/31;
E05Y 2400/502; E05Y 2400/514; E05Y 2900/11;
H02P 29/028

(86) Internationale Anmeldenummer:
**PCT/EP2022/056523**

(87) Internationale Veröffentlichungsnummer:
**WO 2022/223201 (27.10.2022 Gazette 2022/43)**

(54) **BETRIEBSVERFAHREN UND STEUERUNG FÜR EINE GEBÄUDE- ODER EINFRIEDUNGSABSCHLUSSANTRIEBSEINRICHTUNG**

OPERATING METHOD AND CONTROLLER FOR BUILDING OR BOUNDARY CLOSURE DRIVE DEVICE

PROCÉDÉ DE FONCTIONNEMENT ET DISPOSITIF DE COMMANDE POUR D'ENTRAÎNEMENT DE FERMETURE DE BÂTIMENT OU DE LIMITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2021   DE 102021110365**
**07.06.2021   DE 102021114570**

(43) Veröffentlichungstag der Anmeldung:
**28.02.2024   Patentblatt 2024/09**

(73) Patentinhaber: **Hörmann KG Antriebstechnik**
**33803 Steinhagen (DE)**

(72) Erfinder:
• **DIECKMANN, Karsten**
**49179 Ostercappeln (DE)**
• **SANKE, Michael**
**33378 Rheda-Wiedenbrück (DE)**
• **ROBBEN, Michael**
**33829 Borgholzhausen (DE)**
• **AULENKAMP, Marc**
**33378 Rheda-Wiedenbrück (DE)**
• **KRÜGER, Benjamin**
**42119 Wuppertal (DE)**
• **UPHUES, Andreas**
**44225 Dortmund (DE)**

(74) Vertreter: **KASTEL Patentanwälte PartG mbB**
**St.-Cajetan-Straße 41**
**81669 München (DE)**

(56) Entgegenhaltungen:
**DE-A1- 102010 014 806     DE-B3- 102016 102 703**
**US-A1- 2015 188 471**

## Beschreibung

Die Erfindung betrifft ein Betriebsverfahren für eine Gebäude- oder Einfriedungsabschlussantriebseinrichtung zum motorischen Bewegen wenigstens eines Flügels eines Gebäude- oder Einfriedungsabschlusses. Weiter betrifft die Erfindung eine Steuerung für eine derartige Gebäude- oder Einfriedungsabschlussantriebseinrichtung. Weiter betrifft die Erfindung eine Gebäudeoder Einfriedungsabschlussantriebsvorrichtung mit der Steuerung und der Gebäude- oder Einfriedungsabschlussantriebseinrichtung. Weiter betrifft die Erfindung einen damit versehenen Gebäude- oder Einfriedungsabschluss. Schließlich betrifft die Erfindung ein Computerprogramm oder ein Computerprogrammprodukt mit maschinenlesbaren Steueranweisungen zum Durchführen des Betriebsverfahrens.

Zum technologischen Hintergrund und zum Stand der Technik wird auf folgende Literaturstellen verwiesen:

[1] "Rolltore und Rollgitter", Firmenbroschüre der Hörmann KG Verkaufsgesellschaft mit dem Druckvermerk "Stand 04.2020 / Druck 04.2020 / HF 84555 DE / PDF", heruntergeladen aus dem Internet unter www.hoermann.com am 20.04.2021;

[2] "Doppel- und Sammelgaragentore" Firmenbroschüre der Hörmann KG Verkaufsgesellschaft mit dem Druckvermerk "Stand 04.2018 / Druck 09.2018 / HF 86972 DE / PDF", heruntergeladen aus dem Internet unter www.hoermann.com am 20.04.2021;

[3] "Schnelllauftore", Firmenbroschüre der Hörmann KG Verkaufsgesellschaft mit dem Druckvermerk "Stand 04.2019 / Druck 04.2019 / HF 84894 de / G.xx", heruntergeladen aus dem Internet unter www.hoermann.com am 20.04.2021;

[4] "Industrie-Sektionaltore", Firmenbroschüre der Hörmann KG Verkaufsgesellschaft mit dem Druckvermerk "Stand 04.2020 / Druck 04.2020 / HF 86465 DE / PDF", heruntergeladen aus dem Internet unter www.hoermann.com am 20.04.2021;

[5] "Anleitung für Montage, Betrieb und Wartung - Wellenantrieb für Industrie-Sectionaltore" ", Firmenbroschüre der Hörmann KG Verkaufsgesellschaft mit dem Druckvermerk "TR10E001-J RE / 06.2016", heruntergeladen aus dem Internet unter www.hoermann.com am 20.04.2021;

[6] "Industrieantriebe für Sektionaltor - Wellenantriebe, Steuerungen und Zubehör - Brandschutzmeldung für Feuerschutz-Schiebetore - Ersatzteil-Übersicht - Gültig ab 01.03.2020" ", Firmenbroschüre der Hörmann KG Verkaufsgesellschaft mit dem Druckvermerk "Stand: 03.2020 HF 85609 / PMD12265-09 RE / de", heruntergeladen aus dem Internet unter www.hoermann.com am 20.04.2021;

[7] WO2019/007764 A1

[8] DE 199 17 831 A1

[9] WO 2017/125257 A1

[10] DE 10 2018 112 439 A1

[11] "Frequenzumrichter" - Wikipedia, abgerufen am 20.03.2021 unter "https://de.wikipedia.org/w/index. php?title=Frequenzumrichter&oldid=209 910364"

[12] Anleitung für Montage, Betrieb und Service Industrietor-Steuerung B 460 FU STA für Schiebetore, betriebsinternes Dokument

[13] Anleitung für Montage, Betrieb und Service Industrietor-Steuerung B 460 FU K für Kipptore, betriebsinternes Dokument

[14] Anleitung für Montage, Betrieb und Service Industrietor-Steuerung B 460 FU für Wellenantrieb WA 400 FU / WA 400 M-FU / ITO 400 FU, betriebsinternes Dokument

[15] DE 10 2016 102 703 B3

[16] US 2015/188471 A1

[17] DE 10 2010 014 806 A1

Im Folgenden werden einige hier verwendete Begriffe erläutert und definiert. Gebäudeabschlüsse dienen zum Abschluss von Öffnungen in Gebäuden. Einfriedungsabschlüsse dienen zum Abschluss von Öffnungen in Einfriedungen, wie zum Beispiel Hofeinfahrten. Die hier in Rede stehenden Gebäude- oder Einfriedungsabschlüsse weisen einen beweglichen Flügel zum Öffnen und Schließen der Öffnung auf. Beispiele für Gebäude- und Einfriedungsabschlüsse sind Fenster, Türen und Tore, insbesondere der in den Literaturstellen [1] bis [4] gezeigten Art. Unter Gebäude- oder Einfriedungsabschlussantrieben werden Antriebe zum Antreiben der Bewegung des Flügels von Gebäude- und Einfriedungsabschlüssen verstanden. Beispiele für Gebäude- oder Einfriedungsabschlüsse sind Türantriebe und Torantriebe. Die hier in Rede stehenden Gebäude- oder Einfriedungsabschlussantriebe weisen einen Elektromotor, insbesondere Drehstrommotor, und ein Getriebe auf. Beispielsweise sind die Gebäude- oder Einfriedungsabschlüsse als Wellentorantriebe zum Antreiben einer getrieblich mit dem Flügel verbundenen Welle eines als Tor ausgebildeten Gebäude- und Einfriedungsabschlusses oder als Schleppantriebe mit einem durch den Elektromotor hin- und her beweglich geführten Schlitten, an den der Flügel angelenkt werden kann, ausgebildet. Beispiele für Gebäude- oder Einfriedungsabschlussantriebe der hier in Rede stehenden Art sind in den Literaturstellen [1] bis [6] gezeigt und erläutert. Insbesondere offenbaren die Literaturstellen [1] bis [6] Gebäude- oder Einfriedungsabschlussantriebseinrichtungen zum motorischen Bewegen wenigstens eines Flügels eines Gebäude- oder Einfriedungsabschlusses, wobei die Gebäude- oder Einfriedungsabschlussantriebseinrichtung einen Gebäudeoder Einfriedungsabschlussantrieb mit einem Elektromotor und eine Lastparametererfassungseinrichtung zur Erfassung eines von einer Last an dem Gebäudeoder Einfriedungsabschlussantrieb abhängigen Lastparameters aufweist. Insbesondere ist ein, zum Beispiel auch aus [7] bekannter Absolutwertgeber zum Erfassen eines absoluten Drehwinkels einer Abtriebswelle des als Torantrieb ausgebildeten Gebäude- oder Einfriedungsabschlussantriebs vorgesehen, mittels dem die jeweilige Torposition des angeschlossenen Torflügels und somit auch der Bewegungsweg und auch die Bewegungsgeschwindigkeit des Torflügels erfassbar ist. Die Bewegungsgeschwindigkeit ist meist von der Last abhängig und kann als Lastparameter zum Erfassen einer Last herangezogen werden. Alternativ oder zusätzlich können momentane Stromstärke oder momentane Leistung als Lastparameter herangezogen werden.

Die Literaturstellen [8] bis [10] offenbaren unterschiedliche Betriebsverfahren und entsprechend eingerichtete Steuerungen für Gebäude- oder Einfriedungsabschlussantriebseinrichtungen. In der Literaturstelle [11] findet sich eine Definition des Begriffs "Frequenzumrichters", und ein typischer Aufbau wird darin erläutert.

Die Literaturstelle [17] offenbart eine Torantriebsvorrichtung zum Antreiben eines Tores sowie ein Antriebsverfahren zum automatischen Antreiben des Tores, wobei die Torantriebsvorrichtung derart ausgebildet ist, dass sie das Tormodell des anzutreibenden Tores erfassen kann.

Die Literaturstelle [16] offenbart eine Steuerung eines bürstenlosen 3-Phasen-Wechselstrommotors eines umweltfreundlichen Fahrzeugs, die einen normalen Betrieb des bürstenlosen 3-Phasen-Wechselstrommotors gewährleisten kann, wenn ein Stromsensor des bürstenlosen Dreiphasen-Wechselstrommotors, der in einem motorbetriebenen elektrischen Antriebssystem des umweltfreundlichen Fahrzeugs eingebaut ist, in einem Fehlerzustand ist. Dabei wird ein Verfahren zum Steuern des 3-Phasen-Wechselstrommotors mit den folgenden Schritten vorgeschlagen: Umwandeln eines Drehmomentbefehlssignals einer oberen Steuerung in einen Spannungsbefehl, Erzeugen eines Strommesswerts für einen in zwei Phasen des 3-Phasen-Wechselstrommotors fließenden Strom in Abhängigkeit vom Spannungsbefehl unter Verwendung eines Stromsensors, Erzeugen eines Stromschätzwerts durch Verwenden von Antriebserfassungsinformationen des 3-Phasen-Wechselstrommotors abhängig vom Spannungsbefehl, Berechnen eines Stromschätzfehlers unter Verwendung des Strommesswerts und des Stromschätzwerts, Vergleichen mit einem voreingestellten Referenzwert unter Verwendung des berechneten Stromschätzfehlers und Durchführen ein Zustandsübergang, der abhängig vom Vergleichsergebnis einen Antriebssteuerungstyp des 3-Phasen-Wechselstrommotors ändert.

Die Literaturstelle [15] offenbart ein Betriebsverfahren gemäß dem Oberbegriff des Anspruchs 1.

Wie aus den Literaturstellen [1] bis [6] ersichtlich, sind Gebäude- oder Einfriedungsabschlüsse sehr unterschiedlich aufgebaut, wobei die Flügel oft vertikal bewegt werden und mit Federn oder dergleichen zum Gewichtsausgleich verbunden sind. Je nach Betrieb oder Witterungsverhältnissen oder Alterungserscheinungen können Lasten an unterschiedlichen Positionen des Bewegungsweges abweichen. Bestimmte Abweichungen können bei bestimmten Betriebsarten zu einem ungleichmäßigen Lauf des Flügels führen, was Reklamationen des Endkunden und erhöhte Serviceeinsätze zur Folge haben kann.

Die Erfindung hat sich zur Aufgabe gestellt, ein effizienteres Betriebsverfahren zu schaffen, mit dem unter Schonung von Ressourcen ein verbesserter Lauf des angetriebenen Flügels bei vermindertem Risiko von Reklamationen und Serviceeinsätzen erreichbar ist.

Zum Lösen dieser Aufgabe schafft die Erfindung ein Betriebsverfahren nach Anspruch 1. Eine entsprechend eingerichtete Steuerung, eine damit versehene Gebäude- oder Einfriedungsabschlussantriebsvorrichtung sowie ein Computerprogramm[produkt] sind in den Nebenansprüchen angegeben. Vorteilhafte Ausgestaltungen sind Gegenstand der Unteransprüche.

Die Erfindung schafft gemäß einem Aspekt davon ein Betriebsverfahren für eine Gebäude- oder Einfriedungsabschlussantriebseinrichtung nach dem unabhängigen Anspruch 1.

Es ist bevorzugt, dass Schritt a) umfasst:
a1) Erfassen als Lastparameter wenigstens einen Parameter aus der Gruppe, die eine Drehgeschwindigkeit einer als Teil des Kraftübertragungsweges vorgesehenen Welle, wie Motorwelle oder Abtriebswelle, des Gebäude- oder Einfriedungsabschlussantriebs, einen Momentanstrom des Elektromotors, ein Drehmoment an einer kraftübertragenden Welle, wie Motorwelle oder Abtriebswelle, des Gebäude- oder Einfriedungsabschlussantriebs, eine Momentanleistung des Elektromotors und einen Schlupf an dem Elektromotor umfasst, und Durchführen der Regelung anhand dieses wenigstens einen Parameters.

Es ist bevorzugt, dass Schritt a) umfasst:
a2) Durchführen einer Vektorregelung, um anhand eines Kennfeldes mit Motorkennwerten die momentanen Blind- und Wirkstromkomponenten des Elektromotors auf Basis des Lastparameters als Eingangsgröße zu regeln.

Gemäß einem weiteren Aspekt schafft die Erfindung eine Steuerung für eine Gebäude- oder Einfriedungsabschlussantriebseinrichtung, die einen Gebäude- oder Einfriedungsabschlussantrieb mit Elektromotor, eine Lastparametererfassungseinrichtung zur Erfassung eines von einer Last an dem Gebäude- oder Einfriedungsabschlussantrieb abhängigen Lastparameters und einen Frequenzumrichter zum Ansteuern des Elektromotors aufweist, wobei die Steuerung zum Durchführen des Betriebsverfahrens nach einer der vorstehenden Ausgestaltungen eingerichtet ist.

Es ist bevorzugt, dass die Steuerung eine Umschalteinrichtung zum Umschalten mehrerer Steuermodi aufweist. Dabei umfasst ein erster Steuermodus Durchführen des Betriebsverfahrens nach einer der vorstehenden Ausgestaltungen. Mittels der Umschaltsteuerung lässt sich auf wenigstens einen anderen Steuermodus umschalten. Dies kann ein zweiter Steuermodus sein, in dem der Frequenzumrichter dauerhaft im U/f-Betrieb betrieben wird. Dies kann alternativ oder zusätzlich ein dritter Steuermodus sein, in dem die Durchführung der Schritte b) und c) deaktiviert ist und der Frequenzumrichter dauerhaft in dem Regelungsbetrieb (Schritt a)) betrieben wird.

Es ist bevorzugt, dass die Umschalteinrichtung zur Auswahl der Steuermodi über ein Programm-Menü der Steuerung eingerichtet ist.

Gemäß einem weiteren Aspekt schafft die Erfindung eine Gebäude- oder Einfriedungsabschlussantriebsvorrichtung, umfassend

eine Gebäude- oder Einfriedungsabschlussantriebseinrichtung, die einen Gebäude- oder Einfriedungsabschlussantrieb mit Elektromotor, eine Lastparametererfassungseinrichtung zur Erfassung eines von einer Last an dem Gebäude- oder Einfriedungsabschlussantrieb abhängigen Lastparameters und einen Frequenzumrichter zum Ansteuern des Elektromotors aufweist, und eine Steuerung nach einer der voranstehenden Ausgestaltungen.

Gemäß einem weiteren Aspekt schafft die Erfindung einen Gebäude- oder Einfriedungsabschluss, umfassend einen zum Öffnen und Schließen bewegbaren Flügel, optional eine Gewichtsausgleicheinrichtung für den Flügel, und eine Gebäude- oder Einfriedungsabschlussantriebsvorrichtung der voranstehend genannten Art.

Es ist bevorzugt, dass der Gebäude- oder Einfriedungsabschluss ein Sektionaltor, Kipptor, Rolltor oder Hubtor mit einem sich zumindest teilweise in vertikaler Richtung bewegenden Torflügel als Flügel ist, wobei die Gewichtsausgleicheinrichtung wenigstens eine Feder aufweist.

Gemäß einem weiteren Aspekt schafft die Erfindung ein Computerprogramm oder Computerprogrammprodukt, umfassend maschinenlesbare Steueranweisungen, die, wenn in eine Steuerung der Gebäude- oder Einfriedungsabschlussvorrichtung oder des Gebäude- oder Einfriedungsabschlusses nach einer der voranstehenden Ausgestaltungen geladen, diese veranlassen, das Betriebsverfahren nach einer der oben genannten Ausgestaltungen durchzuführen.

Einige Vorteile und Funktionen einiger bevorzugter Ausführungsformen der Erfindung werden im Folgenden näher erläutert.

Bevorzugte Ausgestaltungen der Erfindung betreffen ein Betriebsverfahren und eine Steuerung für einen Torantrieb.

Bevorzugte Ausgestaltungen der Erfindung schaffen eine Möglichkeit einer adaptive Torlaufkontrolle: Insbesondere sind eine Analyse des Torlaufverhaltens und eine automatische Umschaltung in einen Schonbetrieb bei ungleichmäßigem Torlauf vorgesehen.

Um eine maximale Drehzahl und ein maximales Drehmoment des Motors bei minimaler Bauform zu erzielen, ist die Ansteuerung des Motors mit Hilfe eines effizienten und geregelten Frequenzumrichters vorteilhaft. Wenn sich in dem Gesamtsystem im Laufe der Zeit Totzeiten ergeben, kann dies zu abweichendem Regelungsverhalten führen. Als Beispiel kann hier eine Torsionsfeder bei einem federausgeglichenen Tor genannt werden. Mit der Zeit setzt sich die Feder, wodurch das Tor folglich nicht mehr ausgeglichen ist. Wenn dieses Ungleichgewicht einen kritischen Wert überschreitet, kann dies zu einem ungleichmäßigen Torlauf führen. Dieser ist optisch wahrnehmbar. Außerdem wirkt sich dieser negativ auf die Tormechanik aus und resultiert letztendlich in erhöhtem Verschleiß.

Aufgrund des beschriebenen Problems ist als eine interne Lösung für den Bereich der federausgeglichenen Tore vorgeschlagen worden, den Motor mit einem Frequenzumrichter anzusteuern, der aber immer im U/f Betrieb ohne Regelung betrieben wird. Würde man den Antrieb mit Regelung betreiben, kann es sonst früher oder später zu einem ungleichmäßigen Torlauf kommen, der zu erhöhten Kundenreklamationen und kostenintensiven Serviceeinsätzen führt, da der Kunde das Torlaufverhalten nicht akzeptiert.

Mängel bisheriger Lösungsansätze sind z.B.:

1. Eingeschränkte Leistung im U/f Betrieb oder teurere, größer dimensionierte Antriebstechnik bei vergleichbarer Leistung
2. Zusätzliche Kosten durch Serviceeinsätze
3. Gefahr eines frühzeitigen Ausfalls der Toranlage bei einer Regelung ohne adaptive Torlaufkontrolle, falls diese nicht zeitnah instandgesetzt wird.

Bei besonders bevorzugten Ausgestaltungen der Erfindung wird vorgeschlagen, die technisch wirtschaftlich betrachtete effizientere Regelung einzusetzen und erhöhten Kundenreklamationen und teuren Serviceeinsätzen z. B. aufgrund nachlassender Federspannungen entgegenzuwirken. Hierfür ist bevorzugt, dass die adaptive Torlaufkontrolle automatisch den Torlauf erkennt und bewertet und daraus resultierend Maßnahmen durch Umschaltung auf den U/f-Betrieb ableitet, die den Torlauf verbessern.

Vorzugsweise sind eine automatische Erkennung und Bewertung des Laufs des angetriebenen Flügels vorgesehen.

Bei einer bevorzugten Ausgestaltung wird für die automatische Bewertung des Laufs des Flügels, wie z.B. des Torlaufs, kontinuierlich die Regelabweichung (Sollzu Istwert) berechnet.

Vorzugsweise wird das Ergebnis der Regelabweichung zunächst gewichtet, da sich bei empirischen Untersuchungen herausgestellt hat, dass sich nur Schwingungen (Regelabweichungen) mit einer bestimmten Grundfrequenz auf die Torkonstruktion übertragen und sich somit negativ auf den gleichförmigen Torlauf auswirken.

Zum Beispiel wird für die Bewertung des Laufs des Flügels, wie z.B. Torlaufes, die resultierende Geschwindigkeitsabweichung im Zeitbereich mathematisch integriert. Im Normalfall schwankt der IST-Wert um den Soll-Wert, wodurch sich folglich ein Integral von 0 ergibt. Der Regler arbeitet somit korrekt und gleicht die Regelabweichung aus.

Wenn jedoch eine längerfristige Abweichung zwischen Soll- und Istwert vorhanden ist, wie es beim ungleichmäßigen Lauf, z.B. Torlauf, der Fall ist, erhöht sich das Integral der Regelabweichung. Wenn das Integral einen definierten Schwellenwert überschreitet wird ein ungleichmäßiger Lauf des Flügels, beispielsweise Torlauf, festgestellt. Vorzugsweise wird die Messung kontinuierlich während der kompletten Flügelbewegung, z.B. Torbewegung, durchgeführt.

Anstelle der Geschwindigkeit können selbstverständlich auch andere Lastparameter, wie z.B. Stromaufnahme, Leistungsaufnahme, Drehmoment usw. zur Regelung herangezogen werden und über deren Verlauf der Differenz von Istzu Soll-Wert der Lauf des Flügels auf Gleichmäßigkeit überwacht werden.

Vorzugsweise werden Maßnahmen für einen besseren Torlauf vorgesehen.

Nachdem der ungleichmäßige Flügellauf, z.B. Torlauf, erkannt wurde, schaltet der Frequenzumrichter vorzugsweise in einen U/f Betrieb um. Bei dieser Betriebsart handelt es sich nicht um eine Regelung mit Rückführung, sondern es wird die Spannung und Frequenz eingestellt (siehe Literaturstelle [11]). Hierdurch reduziert sich der Wirkungsgrad des Motors, dies resultiert jedoch in einem homogenen Lauf des Flügels (z.B. Torlauf), der eine Reduzierung der mechanischen Belastung und damit einen geringeren Verschleiß zur Folge hat.

Neben der automatischen Erkennung durch die adaptive Flügellaufkontrolle besteht bei bevorzugten Ausgestaltungen zudem die Möglichkeit, die Betriebsart von der Regelung, z.B. Vektorregelung, auf den U/f-Betrieb über das Programm-Menü der Steuerung dauerhaft einzustellen, um die Möglichkeit der dauerhaften Schonung des Gebäude- oder Einfriedungsabschlusses (z.B. Tors) mit verringertem Verschleiß zu ermöglichen.

Ebenso besteht die Möglichkeit, die adaptive Flügellaufkontrolle mit ihrer automatischen Erkennung zu deaktivieren, damit der Gebäudeabschluss immer mit der maximal möglichen Geschwindigkeit öffnet und schließt, um so Heizkosten oder Zugluft in den Gebäuden möglichst zu reduzieren.

Vorteilhafte Ausgestaltungen der Erfindung bieten Vorteile hinsichtlich der Herstellkosten aufgrund der möglichen höheren Leistungen bei vergleichbarer Bauform.

Vorteilhafte Ausgestaltungen der Erfindung bieten Vorteile hinsichtlich der Funktionserfüllung: Das Tor oder dergleichen kann durch das automatische Umschalten bei einem ungleichmäßigen Flügellauf/Torlauf dauerhaft oder bis zum nächsten turnmäßigen Serviceeinsatz weiter automatisiert betrieben werden.

Vorteilhafte Ausgestaltungen der Erfindung bieten Vorteile hinsichtlich Bauraum-/Gewichtsersparnis: Bei vergleichbarer Leistung hätten Antriebe mit U/f-Betrieb eine größere Bauform als Antriebe mit Regelung.

Vorteilhafte Ausgestaltungen der Erfindung bieten Vorteile hinsichtlich zusätzlicher Funktionen: Es ist eine adaptive Torlaufkontrolle mit automatischem Umschalten bei ungleichmäßigem Torlauf möglich.

Ein Ausführungsbeispiel wird im Folgenden anhand der beigefügten Zeichnungen näher erläutert. Darin zeigt:

Fig. 1    eine schematische Ansicht eines Ausführungsbeispiel eines Gebäude- oder Einfriedungsabschlusses mit einer Gebäude- oder Einfriedungsabschlussantriebsvorrichtung, die einen Gebäude- oder Einfriedungsabschlussantrieb und eine Steuerung aufweist;

Fig. 2    einen Graphen, der einen zeitlichen Verlauf der z.B. durch Differenz zwischen einem Istwert und einem Sollwert eines Lastparameters gebildeten Regelabweichung des Gebäude- oder Einfriedungsabschlussantriebs bei einem geregelten Betrieb und bei einem normalen, gleichmäßigen Lauf eines durch den Gebäude- oder Einfriedungsabschlussantrieb angetriebenen Flügels des Gebäude- oder Einfriedungsabschlusses zeigt,

Fig. 3    einen Graphen vergleichbar zu Fig. 2 bei einem ungleichmäßigen Lauf des Flügels; und

Fig. 4    einen Graphen, der den Verlauf von Spannung U und magnetischen Fluss bei einem U/f-Betrieb über die Frequenz f zeigt.

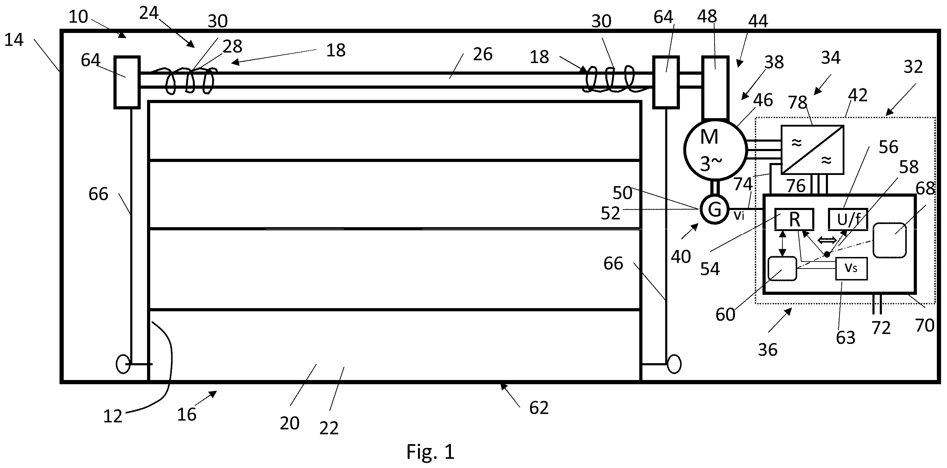

Fig. 1 zeigt schematisch einen Gebäude- oder Einfriedungsabschluss 10 mit einem Flügel 20 zum Abschließen einer Öffnung 12 in einem Gebäude 14 oder einer Einfriedung. In dem dargestellten Ausführungsbeispiel ist der Gebäude- oder Einfriedungsabschluss 10 als Tor 16 ausgebildet.

Das Tor 16 ist optional, wie bei dem dargestellten Ausführungsbeispiel, mit einer Gewichtsausgleichseinrichtung 18 ausgerüstet, die das Gewicht eines zumindest teilweise vertikal bewegbaren Flügels 20 - hier in Form eines Torblattes 22 - ausgleicht. Das Tor 16 ist in dem dargestellten Ausführungsbeispiel ein Sektionaltor 24, beispielsweise der in [4] bis [6] gezeigten Art, in nicht dargestellten anderen Ausführungsbeispielen ist das Tor ein Rolltor, ein Hubtor, ein Kipptor, ein Schnelllauftor oder dergleichen. Für nähere Einzelheiten zu möglichen Ausgestaltungen des Tores wird auf die Literaturstellen [1] bis [6] verwiesen. Das Tor 16 kann in weiteren nicht gezeigten Ausführungen auch als Hofeinfahrtstor, beispielsweise als Schiebetor oder als Drehflügeltor, oder als Deckenfalttor oder als Feuerschutzschiebetor oder dergleichen ausgebildet sein.

Das Tor 16 ist in dem darstellten Ausführungsbeispiel mit einer Torwelle 26 versehen, die getrieblich z.B. mittels Seiltrommeln 64 und Zugseilen 66, mit dem Flügel 20 verbunden ist. In dem dargestellten Ausführungsbeispiel ist die Torwelle 26 Teil der Gewichtsausgleichseinrichtung 18. In anderen Ausgestaltungen, wie z.B. bei einem Rolltor, kann die Torwelle 26 auch als Wickelwelle zum Auf- und Abwickeln des als Rolltorpanzers oder Rolltorbehang ausgebildeten Flügels 20 ausgebildet sein.

Die Gewichtsausgleichseinrichtung 18 weist weiter wenigstens einen mechanischen Kraftspeicher 28 auf. Als mechanischer Kraftspeicher 28 ist beispielsweise eine Feder, hier z.B. in Form einer Torsionsfeder 30, die an der Torwelle 26 angreift, vorgesehen. Auch andere mechanische Kraftspeicher 28 - wie z.B. Zugfedern oder Gewichte, sind möglich.

Der Gebäude- oder Einfriedungsabschluss 10 weist weiter eine Gebäude- oder Einfriedungsabschlussantriebsvorrichtung 32 zum Antreiben der Bewegung des Flügels 20 auf. Die Gebäude- oder Einfriedungsabschlussantriebsvorrichtung 32 weist eine Gebäude- oder Einfriedungsabschlussantriebseinrichtung 34 und eine Steuerung 36 auf. Die Gebäude- oder Einfriedungsabschlussantriebseinrichtung 34 weist einen Gebäude- oder Einfriedungsabschlussantrieb 38, eine Lastparametererfassungserfassungseinrichtung 40 und einen Frequenzumrichter 42 auf.

Der Gebäude- oder Einfriedungsabschlussantrieb 38 ist dazu ausgebildet, getrieblich mit dem Flügel 20 verbunden zu werden, um dessen Bewegung anzutreiben. Entsprechend der Bauart des Gebäude- oder Einfriedungsabschlusses 10 kann der Gebäude- oder Einfriedungsabschlussantrieb 38 ganz unterschiedlich ausgebildet sein. Er kann in nicht dargestellten Ausführungsbeispielen als Schleppantrieb mit einem an einer Führung längsbeweglich geführten Schlitten, als Drehtorantrieb, als Schiebetorantrieb oder dergleichen ausgebildet sein. In dem dargestellten Ausführungsbeispiel ist der Gebäude- oder Einfriedungsabschlussantrieb 38 als Wellentorantrieb 44 ausgebildet.

Allgemein weist der Gebäude- oder Einfriedungsabschlussantrieb 38 einen durch den Frequenzumrichter 42 ansteuerbaren Elektromotor 46, insbesondere in Form eines Drehstrommotors, und ein Getriebe 48 auf.

Die Lastparametererfassungserfassungseinrichtung 40 ist zum Erfassen wenigstens eines Lastparameters, der abhängig von einem an dem Gebäude- oder Einfriedungsabschlussantrieb 38 anliegenden Last ist, ausgebildet. Beispielsweise kann die Lastparametererfassungseinrichtung 40 einen Stromsensor zum Erfassen eines momentan durch den Elektromotor fließenden Stroms, einen Leistungssensor zum Erfassen der Motorleistung und/oder einen Geschwindigkeitssensor zur Erfassung einer Drehgeschwindigkeit v an einer Welle, wie z.B. der Welle des Elektromotors oder der Abtriebswelle des Getriebes, des Gebäude- oder Einfriedungsabschlussantriebs 38 aufweisen. In dem dargestellten Ausführungsbeispiel weist die Lastparametererfassungserfassungseinrichtung 40 einen Geber G in Form eines Multiturnabsolutwertgebers 52 zum Erfassen des absoluten Drehwinkels der Welle des Gebäude- oder Einfriedungsabschlussantriebs 38 auf. Daraus lässt sich - nach Durchführung einer Einlernprozedur nach Montage des Gebäude- oder Einfriedungsabschlusses 10 - die momentane Position des Flügels 20 bestimmen. Durch entsprechende zeitliche Ableitung lässt sich aus dem Signal des Multiturnabsolutwertgebers 52 auch die Drehgeschwindigkeit v der Welle des Gebäude- oder Einfriedungsabschlussantriebs 38 als Lastparameter erfassen. Nähere Angaben für eine mögliche Ausgestaltung des Multiturnabsolutwertgebers 52 sind in [7] beschrieben und gezeigt, worauf ausdrücklich verwiesen wird.

Der mögliche Aufbau eines Frequenzumrichters 42 ist allgemein bekannt und wird hier nicht näher beschrieben, es wird für weitere Einzelheiten auf [11] verwiesen.

Die Steuerung weist eine Reglereinrichtung 54, eine U/f-Betriebseinrichtung 56, eine Umschalteinrichtung 58 und eine Flügellaufbewertungseinrichtung 60 auf.

Die Reglereinrichtung 54 ist zum Durchführen eines Regelungsbetriebs des Frequenzumrichters 42 ausgebildet, in dem der Elektromotor 46 mit dem durch die Lastparametererfassungserfassungseinrichtung 40 erfassten Lastparameter als Eingangsgröße rückgeführt geregelt wird. Damit lässt sich ein hinsichtlich Wirkungsgrades und Geschwindigkeit und Drehmoments optimaler Betrieb des Gebäude- oder Einfriedungsabschlussantriebs 38 erreichen. Insbesondere ist die Reglereinrichtung zum Durchführen einer Vektorregelung ausgebildet, in dem der Elektromotor 46 anhand eines in einem Speicher abgelegten Motormodels entsprechend mehrerer Eingangsgrößen Kennfeld-gesteuert wird. Insbesondere wird die Istgeschwindigkeit vi anhand einer vorgegebenen Sollgeschwindigkeit vs geregelt. Die Sollgeschwindigkeit kann, muss aber nicht als konstant vorgegeben sein. Beispielsweise kann die Sollgeschwindigkeit zu Beginn der Bewegung des Flügels sanft ansteigen und am Ende sanft abfallen (Softstart und Softstopp), auch kann die Sollgeschwindigkeit vs entsprechend von wegabhängig sich ändernden Übersetzungen zwischen Geschwindigkeit an der Schließkante 62 des Flügels 20 und der durch den Geber G erfassten Welle im Hinblick auf eine maximal zulässige Schließkantengeschwindigkeit vorgegeben werden, wie dies näher in [9] beschrieben und gezeigt ist. Entsprechende Daten für die Sollwerte vs sind in einem Speicher 63 der Steuerung 36 abgelegt.

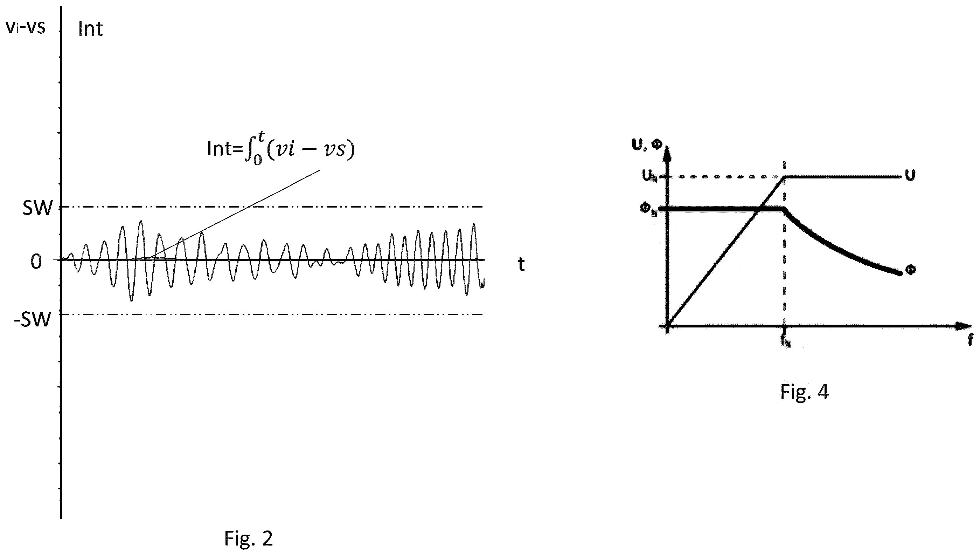

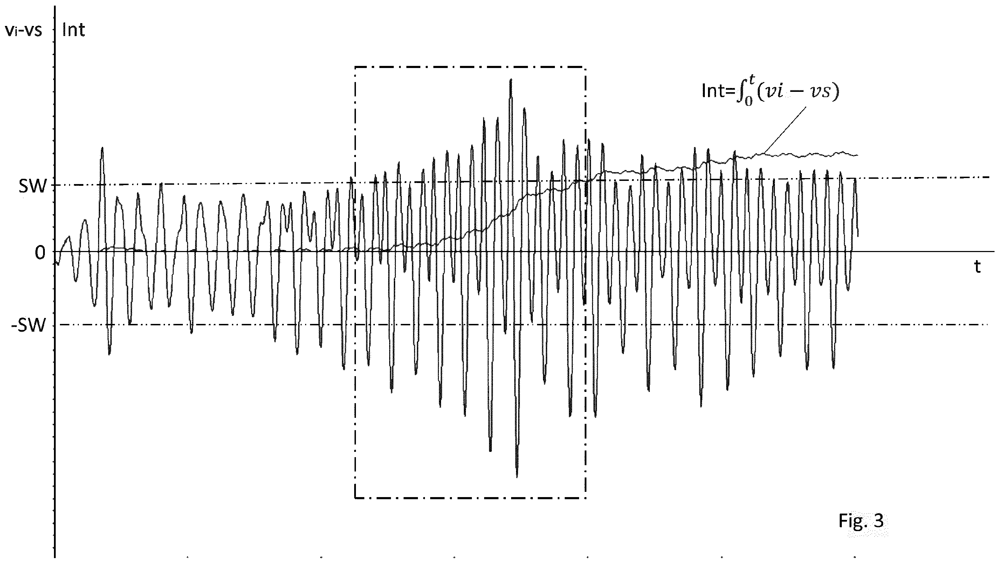

Ein durch die Reglereinrichtung 54 durchgeführter Regelungsbetrieb ist unter unterschiedlichen Bedingungen in Fig. 2 und Fig. 3 dargestellt. Darauf wird weiter unten noch näher eingegangen.

Die U/f-Betriebseinrichtung 56 ist dazu eingerichtet, den Frequenzumrichter 42 im U/f-Betrieb zu betreiben. Dabei erfolgt keine Rückführregelung. Eine U/f-Kennlinie ist in Fig. 4 dargestellt, worauf ebenfalls weiter unten noch näher eingegangen wird.

Die Umschalteinrichtung 58 ist dazu ausgebildet, wahlweise die Reglereinrichtung 54 oder die U/f-Betriebseinrichtung 56 mit dem Frequenzumrichter 42 zu verbinden. Die Umschalteinrichtung 58 kann in einem ersten Steuermodus automatisch abhängig von einem Ausgangssignal der Flügellaufbewertungseinrichtung 60 betätigt werden - um eine adaptive Kontrolle des Laufs des Flügels 20 durchzuführen und bei ungleichmäßigen Lauf in einen Schonbetrieb umzuschalten - oder manuell betätigt werden, um in einem zweiten Steuermodus die Reglereinrichtung 54 dauerhaft aktiv zu halten und die U/f-Betriebseinrichtung 56 inaktiv zu halten oder in einem dritten Steuermodus die Reglereinrichtung dauerhaft inaktiv zu halten und die U/f-Betriebseinrichtung 58 dauerhaft aktiv zu halten.

Insbesondere sind die einzelnen Einrichtungen 54, 56, 58 und 60 der Steuerung 36 als Software implementiert und lassen sich über eine Menüführung an einem angeschlossenen Benutzerendgerät (nicht dargestellt) oder an einer Benutzerschnittstelle 68 der Steuerung 36 konfigurieren, worüber auch die manuelle Ansteuerung der Umschalteinrichtung 58 und die Umschaltung zwischen dem ersten bis dritten Steuermodus erfolgen kann. Die Menüführungen können zum Beispiel vergleichbar zu den in [12] bis [14] erläuterten Menüführungen ausgestaltet sein. Entsprechende Computerprogramme, die Steueranweisungen auch zum Bereitstellen der hier beschriebenen Funktionen der Steuerung 36 und zum Durchführen des hier beschriebenen Betriebsverfahrens der Gebäude- oder Einfriedungsabschlussantriebseinrichtung 34 sind in dem Speicher 63 abgelegt.

Die Flügellaufbewertungseinrichtung 60 überwacht den wenigstens einen Lastparameter aus der Lastparametererfassungserfassungseinrichtung 40, insbesondere dessen zeitlichen Verlauf oder dessen Verlauf über den Weg (z.B. über den absoluten Drehwinkel) auf einen gleichmäßigen Lauf des Flügels 20 hin und ist zum Ausführen der folgenden Funktion ausgebildet. Wird ein gleichmäßiger Lauf des Flügels 20 erfasst, wird die Reglereinrichtung 54 aktiv gehalten. Wird ein ungleichmäßiger Lauf des Flügels 20 erfasst, wird die Umschalteinrichtung 58 automatisch angesteuert, um die U/f-Betriebseinrichtung 56 zu aktivieren und die Reglereinrichtung 54 zu deaktivieren.

Ein ungleichmäßiger Lauf kann insbesondere dann auftreten, wenn der Flügel 20 zumindest in einem Teilbereich der Bewegungsstrecke in unterschiedlichen Richtungen einen unterschiedlichen Widerstand gegen die Antriebsbewegung entgegensetzt. Dies kann z.B. dadurch geschehen, dass es einen Fehler bei der Gewichtsausgleichseinrichtung 18 gibt, so dass das Gewicht des Flügels 20 nicht mehr ausgeglichen ist. Beispielsweise können bei dem Ausführungsbeispiel die Torsionsfedern 30 aufgrund mechanischer Dauerbelastung von ihrer ursprünglichen Einstellung abweichen.

Ein möglicher Ausführungsweg für die Bewertung des Laufs des Flügels 20 auf Gleichmäßigkeit hin wird im Folgenden anhand der Darstellung in den Fig. 2 und 3 näher erläutert.

Für die kontinuierliche Bewertung des Laufs des Flügels 20 wird in der Flügellaufbewertungseinrichtung 60 kontinuierlich die Regelabweichung (Soll- zu Istwert des Lastparameters, z.B. Geschwindigkeitssollwert vs zu Geschwindigkeitsistwert vi) berechnet. Empirische Ermittlungen haben ergeben, dass sich nur Schwingungen mit einer bestimmten Grundfrequenz auf die Bewegung des Flügels 20 so übertragen, dass dieser so ungleichmäßig läuft, dass dies durch einen Benutzer auffällt. Daher wird das Ergebnis der Regelabweichung zunächst gewichtet, wobei Regelabweichungen mit Grundfrequenzen, die sich stark auf den Flügel 20 übertragen, mit einem besonders starken Gewichtungsfaktor in die Berechnung eingehen.

In den Fig. 2 und 3 ist die entsprechend erhaltene Regelabweichung, insbesondere die Differenz vi-vs aus der Istgeschwindigkeit vi und der Sollgeschwindigkeit vs, über die Zeit t in willkürlichen Einheiten dargestellt. vi ist naturgemäß zu unterschiedlichen Zeiten t unterschiedlich und steht verkürzt für vi(t). Auch die vorgegebene Sollgeschwindigkeit vs kann eine von der Zeit abhängige Funktion sein, wie sie zum Beispiel in der Literaturstelle [9] angegeben ist, und steht verkürzt für vs(t).

Bei der dargestellten Bewertungsmethode wird zur Beurteilung, ob der Lauf des Flügels 20 gleichmäßig ist oder nicht, im Zeitbereich mathematisch integriert. In den Fig. 2 und 3 ist demnach neben der Regelabweichung vi-vs auch der zeitliche Verlauf des zeitlichen Integrals Int mit $\text{Int} = \int_0^t (vi - vs)$ angegeben.

In Fig. 2 ist der Normalfall angegeben, in dem der Gebäude- oder Einfriedungsabschluss 10 korrekt installiert ist und korrekt arbeitet. In diesem Normalfall schwankt der Ist-Wert vi gleichmäßig um den Sollwert vs, so dass sich ein Integral von etwa 0 ergibt. Der Regelkreis mit der Reglereinrichtung 54 arbeitet somit korrekt und gleicht die Regelabweichung aus. Fig. 2 zeigt am Beispiel des Tors 16 die Geschwindigkeit IST zu Soll bei einem guten Torlauf.

Wenn der Gebäude- oder Einfriedungsabschluss 10 jedoch ungleichmäßig läuft, führt dies zu einer längerfristigen Abweichung zwischen Istwert und Sollwert des Lastparameters im Verlauf des durch die Reglereinrichtung 54 durchgeführten Regungsbetriebs des Frequenzumrichters 42. Wenn am Beispiel des Tors 16 gesehen ein ungleichmäßiger Torlauf auftritt, beispielsweise aufgrund einer Unausgeglichenheit an der Gewichtsausgleichseinrichtung 18 oder aufgrund anderer Störungen am Tor 16, gibt es eine längerfristige Abweichung zwischen Sollwert vs und Istwert vi, und das Integral Int erhöht sich, wie dies in dem strichpunktiert dargestellten Kästchen in Fig. 3 zu sehen ist. In Fig. 2 und 3 sind auch definierte Schwellwerte SW, -SW (dies ist ein Beispiel, es können auch andere obere und untere Schwellen gesetzt werden) dargestellt. Wenn das Integral Int die so definierte Schwelle überschreitet (oder im negativen Sektor unterschreitet) wird ein ungleichmäßiger Lauf des Flügels 20 festgestellt. Vorzugsweise wird die Messung durch die Flügellaufbewertungseinrichtung 60 während der kompletten Flügelbewegung durchgeführt.

Die in Fig. 2 und 3 dargestellte Bewertungsmethode ist nur ein Beispiel. Selbstverständlich sind auch andere automatische Verfahren zur Beurteilung, ob der Lauf des Flügels 20 gleichmäßig ist oder nicht, möglich. Dies können z.B. auch Messverfahren mit Sensoren am Flügel 20, z.B. Beschleunigungssensoren sein, oder gröbere Verfahren als durch Integralbildung, z.B. Mittelwertbildungen über Zeitintervalle. Während in den Fig. 2 und 3 der Verlauf über die Zeit betrachtet wurde, kann der Verlauf selbstverständlich auch über den z.B. durch den Geber G erfassten Weg s, betrachtet werden.

Ist durch die Flügellaufbewertungseinrichtung 60 ein ungleichmäßiger Lauf des Flügels 20 festgestellt worden, wird die Umschalteinrichtung 58 automatisch betätigt, um die Reglereinrichtung 54 zu deaktivieren und die U/f-Betriebseinrichtung 56 zu aktivieren. Dann wird der Frequenzumrichter in einem Schonbetrieb, wie insbesondere hier in dem U/f-Betrieb betrieben, wie er in Fig. 4 angedeutet ist. Bei dieser Betriebsart handelt es sich nicht um eine Regelung mit Rückführung, sondern es wird die Spannung U und die Frequenz f eingestellt.

Der U/f-Betrieb ist die einfachste Betriebsweise für den Frequenzumrichter 42. Der Frequenzumrichter 42 stellt die Motorspannung U und die Frequenz f in einem konstanten Verhältnis ein. Frequenz f und Spannung U werden bis zur Nennspannung $U_N$ und der Nennfrequenz $f_N$ des Elektromotors 46 zueinander proportional gehalten. Das ist aufgrund des induktiven Verhaltens des Elektromotors 46 nötig und führt zu einem über weite Bereiche konstanten Drehmoment (in Fig. 4 angedeutet durch den magnetischen Fluss $\Phi$ ), ohne den Elektromotor 46 strommäßig zu überlasten. Bei sehr geringen Drehzahlen führt diese Betriebsart aufgrund des ohmschen Widerstandes der Wicklung jedoch zu einem geringeren Drehmoment.

Durch den U/f-Betrieb reduziert sich der Wirkungsgrad des Elektromotors 46. Auch ist die Geschwindigkeit stark von der Last abhängig, so dass die Gesamtzeiten für das Öffnen und Schließen bei gleicher Größe und Bauart des Elektromotors 46 geringer als im Regelungsbetrieb sind. Diese Betriebsart führt jedoch zu einem homogeneren Lauf des Flügels 20, der eine Reduzierung der Belastung und damit einen geringeren Verschleiß zu Folge hat.

Durch die Möglichkeit der manuellen Ansteuerung der Umschalteinrichtung 58 besteht zudem die Möglichkeit, die Betriebsart von der Vektorregelung durch die Reglereinrichtung 54 auf den U/f-Betrieb dauerhaft umzustellen, beispielsweise über das Programm-Menü der Steuerung 36. Hierdurch kann man beispielsweise die dauerhafte Schonung des Gebäude- oder Einfriedungsabschlusses 10 mit verringertem Verschleiß ermöglichen.

Weiter besteht die Möglichkeit, die adaptive Flügellaufkontrolle durch die Flügellaufbewertungseinrichtung 60 mit ihrer automatischen Erkennung in Abhängigkeit von der Torkonstruktion und der Sicherheitseinrichtung der Hauptschließkante zu deaktivieren, um dauerhaft den Regelungsbetrieb zu aktivieren. Dann wird der Flügel immer mit der maximal möglichen Geschwindigkeit geöffnet und/oder geschlossen. Damit kann man z.B. Heizkosten oder Zugluft in Gebäuden 14 möglichst reduzieren.

Die Gebäude- oder Einfriedungsabschlussantriebsvorrichtung 32 ist vorzugsweise dazu eingerichtet, eine Geschwindigkeitsregelung auch bei konischen Seiltrommeln 64 durchzuführen, siehe [9] für weitere Einzelheiten.

Die Gebäude- oder Einfriedungsabschlussantriebsvorrichtung 32 ist vorzugsweise zum Antreiben von Industrietoren ausgebildet. Es sind hohe Torlaufgeschwindigkeit z.B. von bis zu 1 m/s möglich. Auch sind vorzugsweise ein Sanft-Anlauf und Sanft-Stopp für einen schonenden Torlauf eingerichtet. Durch Angabe der Beschlagstypen an der Steuerung 36 ist weiter eine konstante Torlaufgeschwindigkeit auch bei höhergeführten und Vertikal-Beschlägen (H- und V-Beschlägen) möglich.

Insbesondere zum Antreiben von Sektionaltoren bei entsprechend wenig seitlichem Platz und zum Antreiben von Toren ohne Torwelle wie z.B. Kipptoren oder Schiebetoren kann der Gebäude- oder Einfriedungsabschlussantrieb 38 auch als Deckenschlepperantrieb mit Frequenzumrichter 46 auf Basis des in der Fig. 1 gezeigten Wellentorantriebs 44 ausgebildet sein, der als Antriebskopf an eine entsprechende Schlittenführung (nicht dargestellt aber aus den Literaturstellen [1] bis [5] bekannt) angeschlossen wird.

Die Steuerung 36 kann in einem separaten Steuerungsgehäuse 70 untergebracht sein, das einen Stromeingang 72 zum Anschließen an ein Stromnetz, Signalein- und -ausgänge 74 für Geber, Sensoren, Peripheriegeräte und zum Steuern eines externen Frequenzumwandlers 46 und einen Stromausgang 76 aufweist.

An dem Steuerungsgehäuse 70 ist außen die Benutzerschnittstelle 68 vorgesehen, welche z.B. eine 4-fach 7-Segment-Anzeige für Uhrzeitstempel zu Ereignissen und als Anzeigeeinrichtung und Tasten, eventuell beleuchtet, als Eingabeeinrichtung sowie einen optional einen Hauptnetzschalter aufweist. Als Standard ist vorzugsweise ein CEE-Stecker mit Netzzuleitung vorgesehen.

Die Steuerung 36 kann weiter mit einer drahtlosen und/oder drahtgebundenen Kommunikationsschnittstelle ausgebildet sein, die die Steuerung 36 drahtlos, z.B. per Bluetooth oder WLAN mit dem Internet oder mit Benutzerendgeräten wie PC, Smartphone, Tablet verbinden kann. Damit kann eine einfache Installation per BlueControl-App durch Bluetooth-Anschluss eines Smartphones oder Tablets erfolgen. Auch können Änderungen an den Computerprogrammen in dem Speicher 63, wie z.B. Updates, oder Übertragung von Daten und Einstellungen der Computerprogramme über die Kommunikationsschnittstelle erfolgen.

Die Steuerung 36 weist vorzugsweise eine Energiesparfunktion auf, in der einzelne elektrische oder elektronische Baugruppen - beispielsweise nach Ablauf eines Timers - für einen Standbymodus inaktiviert werden und Eingabe- oder Schnittstellen aktiv gehalten werden, um die Steuerung aus einem Standby-Modus in einen Betriebsmodus zu überführen. Vorzugsweise ist ein automatischer Zulauf des Flügels 20 nach einer vorgegebenen Zeit nach Öffnung programmierbar. Vorzugsweise ist eine Ausblendfunktion bei Installation einer Lichtschranke in der Torzarge vorgesehen. Die Signalein- und -ausgänge 74 umfassen vorzugsweise eine HCP-Bus Schnittstelle für intelligentes Zubehör wie ein SmartControl-Gateway für eine vorausschauende Wartung aus der Ferne.

Weiter kann die Steuerung 36 für folgende Funktionen eingerichtet sein:

- Einstellen und Ansteuern einer separate Teilöffnungsposition
- Anschließen von Peripheriegeräten an einem Optionsrelais z. B. zum Anschluss von Endlagenmeldungen, Verriegelungen, Leuchten etc.
- auf Fahrbahnregelung erweiterbar
- mehrere Zeitschaltuhren zur Programmierung von Szenarien in zwei unterschiedlichen Zeitabschnitten

Der Frequenzumrichter 46 kann in dem Steuerungsgehäuse 70 oder in einem separaten Frequenzumrichtergehäuse 78 oder in einer Elektronikeinheit des Gebäude- oder Einfriedungsabschlussantriebs 38 untergebracht sein. Mittels der Steuerung 36 und dem Frequenzumrichter lässt sich ein Betriebsverfahren für eine Gebäude- oder Einfriedungsabschlussantriebseinrichtung (34) zum motorischen Bewegen wenigstens eines Flügels (20) eines Gebäude- oder Einfriedungsabschlusses (10) durchführen, wobei die Gebäude- oder Einfriedungsabschlussantriebseinrichtung (34) einen Gebäude- oder Einfriedungsabschlussantrieb (38) mit einem Elektromotor (46), eine Lastparametererfassungseinrichtung (40) zur Erfassung eines von einer Last an dem Gebäude- oder Einfriedungsabschlussantrieb (38) abhängigen Lastparameters und einen Frequenzumrichter (42) zum Ansteuern des Elektromotors (46) aufweist, umfassend:

a) Betreiben des Frequenzumrichters (42) in einem Regelungsbetrieb, um den Elektromotor (46) mit dem durch die Lastparametererfassungserfassungseinrichtung (40) erfassten Lastparameter als Eingangsgröße rückgeführt zu regeln,

b) Überwachen anhand des Verlaufs des Lastparameters, ob der durch den Gebäude- oder Einfriedungsabschlussantrieb (38) angetriebene Flügel (20) gleichmäßig läuft, und

c) Umschalten des Frequenzumrichters (42) auf einen U/f-Betrieb, wenn in Schritt b) ein ungleichmäßiger Lauf des Flügels (20) festgestellt wird.

Wenngleich bei dem oben beschriebenen Ausführungsbeispiel die Geschwindigkeit als zu Lastparameter, der im Regelungsbetrieb zu regeln ist und aufgrund dessen der Lauf des Flügels bewertet wird, genannt ist, sind bei weiteren Ausführungsformen zusätzlich oder auch alternative andere Parameter am Antrieb heranziehbar. Dabei sind Parameter bevorzugt, die im ungeregelten Betrieb von der Last am Antrieb abhängen und somit Aussagen über den Flügellauf geben können. Beispielsweise wird in Schritt a) als Lastparameter wenigstens ein Parameter aus der Gruppe, die eine Drehgeschwindigkeit (vi) einer Motorwelle oder Abtriebswelle des Gebäude- oder Einfriedungsabschlussantriebs (38), einen Momentanstrom des Elektromotors (46), ein Drehmoment an einer Motorwelle oder Abtriebswelle des Gebäude- oder Einfriedungsabschlussantriebs (38), eine Momentanleistung des Elektromotors (46) und einen Schlupf an dem Elektromotor (46) umfasst. Im Regelungsbetrieb können alternativ oder zu mehreren kumuliert diese vorgenannten Parameter geregelt werden. Auch zur Bewertung des Laufs des Flügels können einer oder mehrere dieser Parameter herangezogen werden.

**Bezugszeichenliste:**

| | |
|---|---|
| 10 | Gebäude- oder Einfriedungsabschluss |
| 12 | Öffnung |
| 14 | Gebäude |
| 16 | Tor |
| 18 | Gewichtsausgleichseinrichtung |
| 20 | Flügel |
| 22 | Torblatt |
| 24 | Sektionaltor |
| 26 | Torwelle |
| 28 | mechanischer Kraftspeicher |
| 30 | Torsionsfeder |
| 32 | Gebäude- oder Einfriedungsabschlussantriebsvorrichtung |
| 34 | Gebäude- oder Einfriedungsabschlussantriebseinrichtung |
| 36 | Steuerung |
| 38 | Gebäude- oder Einfriedungsabschlussantrieb |
| 40 | Lastparametererfassungserfassungseinrichtung |
| 42 | Frequenzumrichter |
| 44 | Wellentorantrieb |
| 46 | Elektromotor |
| 48 | Getriebe (am Antrieb) |
| 50 | Geschwindigkeitssensor |

| 52 | Multiturnabsolutwertgeber |
| 54 | Reglereinrichtung |
| 56 | U/f-Betriebseinrichtung |
| 58 | Umschalteinrichtung |
| 60 | Flügellaufbewertungseinrichtung |
| 62 | Schließkante |
| 63 | Speicher |
| 64 | Seiltrommel |
| 66 | Zugseil |
| 68 | Benutzerschnittstelle |
| 70 | Steuerungsgehäuse |
| 72 | Stromeingang |
| 74 | Signalein- und -ausgänge |
| 76 | Stromausgang |
| 78 | Frequenzumrichtergehäuse |
| G | Geber |
| M | Motor |

**Patentansprüche**

1. Betriebsverfahren für eine Gebäude- oder Einfriedungsabschlussantriebseinrichtung (34) zum motorischen Bewegen wenigstens eines Flügels (20) eines Gebäude- oder Einfriedungsabschlusses (10), wobei die Gebäude- oder Einfriedungsabschlussantriebseinrichtung (34) einen Gebäude- oder Einfriedungsabschlussantrieb (38) mit einem Elektromotor (46), eine Lastparametererfassungseinrichtung (40) zur Erfassung eines von einer Last an dem Gebäude- oder Einfriedungsabschlussantrieb (38) abhängigen Lastparameters und einen Frequenzumrichter (42) zum Ansteuern des Elektromotors (46) aufweist, **gekennzeichnet durch**:

   a) Betreiben des Frequenzumrichters (42) in einem Regelungsbetrieb, um den Elektromotor (46) mit dem durch die Lastparametererfassungserfassungseinrichtung (40) erfassten Lastparameter als Eingangsgröße rückgeführt zu regeln,
   b) Überwachen anhand des Verlaufs des Lastparameters, ob der durch den Gebäude- oder Einfriedungsabschlussantrieb (38) angetriebene Flügel (20) gleichmäßig läuft, und
   c) Umschalten des Frequenzumrichters (42) auf einen U/f-Betrieb, wenn in Schritt b) ein ungleichmäßiger Lauf des Flügels (20) festgestellt wird;

   wobei Schritt b) wenigstens einen oder mehrere der Schritte umfasst:

   b1) Bilden eines Mittelwerts einer aus einem Istwert (vi) und einem Sollwert (vs) des Lastparameters gebildeten Regelungsabweichung über die Zeit (t) oder den Bewegungsweg des Flügels (20) oder den Drehwinkel des Gebäude- oder Einfriedungsabschlussantriebs (38) und Vergleichen des Mittelwerts mit einem Schwellwert (SW);
   b2) Bilden eines Integrals (Int) einer aus Istwert (vi) und Sollwert des Lastparameters gebildeten Regelungsabweichung (vi-vs) über die Zeit oder den Bewegungsweg des Flügels oder den Drehwinkel des Gebäude- oder Einfriedungsabschlussantriebs und Vergleichen des Integrals (Int) mit einem vorbestimmten Schwellwert (SW), um einen gleichmäßigen oder ungleichmäßigen Lauf des Flügels (20) festzustellen.

2. Betriebsverfahren nach Anspruch 1,
   **dadurch gekennzeichnet,**
   **dass** Schritt a) umfasst:
   a1) Erfassen als Lastparameter wenigstens einen Parameter aus der Gruppe, die eine Drehgeschwindigkeit (vi) einer Motorwelle oder Abtriebswelle des Gebäude- oder Einfriedungsabschlussantriebs (38), einen Momentanstrom des Elektromotors (46), ein Drehmoment an einer Motorwelle oder Abtriebswelle des Gebäude- oder Einfriedungsabschlussantriebs (38), eine Momentanleistung des Elektromotors (46) und einen Schlupf an dem Elektromotor (46) umfasst, und Durchführen der Regelung anhand dieses wenigstens einen Parameters.

3. Betriebsverfahren nach einem der voranstehenden Ansprüche,
   **dadurch gekennzeichnet,**
   **dass** Schritt a) umfasst:
   a2) Durchführen einer Vektorregelung, um anhand eines Kennfeldes mit Motorkennwerten die momentanen Blind- und Wirkstromkomponenten des Elektromotors (46) auf Basis des Lastparameters als Eingangsgröße zu regeln.

4. Steuerung (36) für eine Gebäude- oder Einfriedungsabschlussantriebseinrichtung (34), die einen Gebäude- oder Einfriedungsabschlussantrieb (38) mit Elektromotor (46), eine Lastparametererfassungseinrichtung (40) zur Erfassung eines von einer Last an dem Gebäude- oder Einfriedungsabschlussantrieb (38) abhängigen Lastparameters und einen Frequenzumrichter (42) zum Ansteuern des Elektromotors (46) aufweist, wobei die Steuerung (36) zum Durchführen des Betriebsverfahrens nach einem der voranstehenden Ansprüche eingerichtet ist.

5. Steuerung (36) nach Anspruch 4, **dadurch gekennzeichnet,**
   **dass** die Steuerung (36) eine Umschalteinrichtung (58) zum Umschalten mehrerer Steuermodi aufweist, von denen ein erster Steuermodus Durchführen des Betriebsverfahrens nach einem der voranstehenden Ansprüche umfasst, wobei wenigstens ein weiterer der folgenden Steuermodi einstellbar ist:

5.1 ein zweiter Steuermodus, in dem der Frequenzumrichter (42) dauerhaft im U/f-Betrieb betrieben wird,

5.2 ein dritter Steuermodus, in dem die Durchführung der Schritte b) und c) deaktiviert ist und der Frequenzumrichter (42) dauerhaft in dem Regelungsbetrieb von Schritt a) betrieben wird.

6. Steuerung (36) nach Anspruch 5, **dadurch gekennzeichnet,** **dass** die Umschalteinrichtung (58) zur Auswahl der Steuermodi über ein Programm-Menü der Steuerung (36) eingerichtet ist.

7. Gebäude- oder Einfriedungsabschlussantriebsvorrichtung (32), umfassend eine Gebäude- oder Einfriedungsabschlussantriebseinrichtung (34), die einen Gebäude- oder Einfriedungsabschlussantrieb (38) mit Elektromotor (46), eine Lastparametererfassungseinrichtung (40) zur Erfassung eines von einer Last an dem Gebäude- oder Einfriedungsabschlussantrieb (38) abhängigen Lastparameters und einen Frequenzumrichter (42) zum Ansteuern des Elektromotors (46) aufweist, und eine Steuerung (36) nach einem der Ansprüche 4 bis 6.

8. Gebäude- oder Einfriedungsabschluss (10), umfassend einen zum Öffnen und Schließen bewegbaren Flügel (20), eine Gewichtsausgleichseinrichtung (18) für den Flügel (20) und eine Gebäude- oder Einfriedungsabschlussantriebsvorrichtung (32) nach Anspruch 7.

9. Gebäude- oder Einfriedungsabschluss (10) nach Anspruch 8, **dadurch gekennzeichnet,** **dass** er ein Sektionaltor, Kipptor, Rolltor oder Hubtor mit einem sich zumindest teilweise in vertikaler Richtung bewegenden Torflügel als Flügel (20) ist, wobei die Gewichtsausgleichseinrichtung (18) wenigstens eine Feder aufweist.

10. Computerprogramm, umfassend maschinenlesbare Steueranweisungen, die, wenn in eine Steuerung (36) der Gebäude- oder Einfriedungsabschlussvorrichtung (32) nach Anspruch 7 geladen, die Gebäude- oder Einfriedungsabschlussvorrichtung (32) veranlassen, das Betriebsverfahren nach einem der Ansprüche 1 bis 3 durchzuführen.

**Claims**

1. Operating method for a building or boundary closure drive means (34) for motorized movement of at least one wing (20) of a building or boundary closure (10), wherein the building or boundary closure drive means (34) comprises a building or boundary closure drive (38) with an electric motor (46), a load parameter detection means (40) for detecting a load parameter which is dependent on a load at the building or boundary closure drive (38), and a frequency converter (42) for controlling the electric motor (46), **characterized by**:

a) operating the frequency converter (42) in a closed-loop control operation to control the electric motor (46) with the load parameter detected by the load parameter detection means (40) as an input variable in a feedback mode,
b) monitoring, by way of the curve of the load parameter, whether the wing (20) driven by the building or boundary closure drive (38) runs smoothly, and
c) switching the frequency converter (42) to U/f operation if it is determined in step b) that the wing (20) runs unevenly;

wherein step b) comprises at least one or more of the steps:

b1) calculating an average of a closed loop control deviation over time (t) from an actual value (vi) and a target value (vs) or the movement path of the wing (20) or the angle of rotation of the building or boundary closure drive (38) and comparing the average with a threshold (SW);
b2) generating an integral (Int) of a closed-loop control deviation (vi-vs) over time calculated from an actual value (vi) and a target value of the load parameter or the movement path of the wing or the angle of rotation of the building or boundary closure drive and comparing the integral (Int) with a predefined threshold (SW) to determine whether the wing (20) runs smoothly or unevenly.

2. Operating method according to claim 1, **characterized in that** step a) comprises:
a1) detecting, as a load parameter, at least one parameter of the group comprising a rotational speed (vi) of a motor shaft or output shaft of the building or boundary closure drive (38), an instantaneous current of the electric motor (46), a torque at a motor shaft or output shaft of the building or boundary closure drive (38), an instantaneous power of the electric motor (46), and slippage at the electric motor (46), and performing the closed-loop control using said at least one parameter.

3. Operating method according to any one of the preceding claims, **characterized in that** step a) comprises:
a2) performing a vector control for a closed-loop control of the instantaneous reactive and active current components of the electric motor (46) on the basis of the load parameter as input variable using a characteristic map with motor parameters.

4. Controller (36) for a building or boundary closure drive means (34) which comprises a building or boundary closure drive (38) with an electric motor (46), a load parameter detection means (40) for detecting a load parameter dependent on the load at the building or boundary closure drive (38), and a frequency converter (46), wherein the controller (36) is configured for carrying out the operating method according to any one of the preceding claims.

5. Controller (36) according to claim 4, **characterized in that**
the controller (36) comprises a switching means (58) for switching several control modes, a first one of said control modes comprising carrying out the operating method according to any one of the preceding claims, wherein at least one further control mode of the following control modes can be set:

> 5.1 a second control mode in which the frequency converter (42) is continuously operated in the U/f operation,
> 5.2 a third control mode in which the execution of steps b) and c) is deactivated and the frequency converter (42) is permanently operated in the closed-loop control operation of step a).

6. Controller (36) according to claim 5, **characterized in that**
the switching means (58) is configured for the selection of the control modes via a program menu of the controller (36).

7. Building or boundary closure drive device (32), comprising a building or boundary closure drive means (34) which includes a building or boundary closure drive (38) with an electric motor (46), a load parameter detection means (40) for detecting a load parameter dependent on a load at the building or boundary closure drive (38), and a frequency converter (42) for controlling the electric motor (46), and a controller (36) according to any one of claims 4 to 6.

8. Building or boundary closure (10), comprising a wing (20) movable for opening and closing, a weight balancing means (18) for said wing (20), and a building or boundary closure drive device (32) according to claim 7.

9. Building or boundary closure (10) according to claim 8, **characterized in that** said closure is a sectional door, an overhead door, a roller door, or a lift door comprising as a wing (20) at least one door wing that is at least partially movable in a vertical direction, wherein the weight balancing means (18) comprises at least one spring.

10. Computer program comprising machine-readable control instructions which when loaded to a controller (36) of the building or boundary closure device (32) according to claim 7 cause the building or boundary closure device (32) to carry out the operating method according to any one of claims 1 to 3.

**Revendications**

1. Procédé de fonctionnement d'un moyen d'entraînement de fermeture de bâtiment ou enceinte (34) destiné au déplacement motorisé d'au moins un vantail (20) d'une fermeture de bâtiment ou enceinte (10), dans lequel le moyen d'entraînement de fermeture de bâtiment ou enceinte (34) comprend un entraînement de fermeture de bâtiment ou enceinte (38) avec un moteur électrique (46), un moyen de détection de paramètre de charge (40) pour détecter un paramètre de charge qui dépend d'une charge sur l'entraînement de fermeture de bâtiment ou enceinte (38), et un convertisseur de fréquence (42) pour commander le moteur électrique (46), **caractérisé par**:

> a) faire fonctionner le convertisseur de fréquence (42) dans un mode de commande en boucle fermée pour commander le moteur électrique (46) avec le paramètre de charge détecté par le moyen de détection de paramètre de charge (40) comme variable d'entrée dans un mode de rétroaction,
> b) surveiller, à l'aide de la courbe du paramètre de charge, si le vantail (20) entraîné par l'entraînement de fermeture de bâtiment ou enceinte (38) fonctionne de manière régulière, et
> c) commuter le convertisseur de fréquence (42) en mode U/f s'il est déterminé à l'étape b) que le vantail (20) fonctionne de manière irrégulière;

l'étape b) comprenant au moins une ou plusieurs des étapes suivantes:

> b1) calculer une moyenne d'un écart de commande en boucle fermée dans le temps (t) entre une valeur réelle (vi) et une valeur de consigne (vs) ou la trajectoire de mouvement du vantail (20) ou l'angle de rotation de l'entraînement de fermeture de bâtiment ou enceinte (38) et comparer la moyenne à un seuil (SW);
> b2) générer une intégrale (Int) d'un écart de commande en boucle fermée (vi-vs) dans le temps calculé à partir d'une valeur réelle (vi) et d'une valeur de consigne du paramètre de charge ou de la trajectoire de déplacement du vantail ou de l'angle de rotation de l'entraînement de fermeture de bâtiment ou enceinte et comparer l'intégrale (Int) à un seuil prédéfini (SW) pour déterminer si le vantail (20) fonctionne de manière régulière ou irrégulière.

2. Procédé de fonctionnement selon la revendication 1, **caractérisé en ce que**
l'étape a) comprend:
a1) la détection, en tant que paramètre de charge, d'au moins un paramètre du groupe comprenant une vitesse de rotation (vi) d'un arbre moteur ou d'un arbre de sortie de l'entraînement de fermeture de bâtiment ou enceinte (38), un courant instantané du moteur électrique (46), un couple sur un arbre moteur ou un arbre de sortie de l'entraînement de fermeture de bâtiment ou enceinte (38), une puissance instantanée du moteur électrique (46) et un glissement au niveau du moteur électrique (46), et en effectuant la commande en boucle fermée à l'aide dudit au moins un paramètre.

3. Procédé de fonctionnement selon l'une quelconque des revendications précédentes, **caractérisé en ce que**
l'étape a) comprend:
a2) la réalisation d'une commande vectorielle pour une commande en boucle fermée des composantes réactives et actives instantanées du courant du moteur électrique (46) sur la base du paramètre de charge en tant que variable d'entrée à l'aide d'une carte caractéristique avec des paramètres du moteur.

4. Commande (36) pour un moyen d'entraînement de fermeture de bâtiment ou enceinte (34) qui comprend un entraînement de fermeture de bâtiment ou enceinte (38) avec un moteur électrique (46), un moyen de détection de paramètre de charge (40) pour détecter un paramètre de charge dépendant de la charge sur l'entraînement de fermeture de bâtiment ou enceinte (38), un convertisseur de fréquence (46), dans lequel le commande (36) est configuré pour exécuter le procédé de fonctionnement selon l'une quelconque des revendications précédentes.

5. Commande (36) selon la revendication 4, **caractérisée en ce que** le commande (36) comprend un moyen de commutation (58) pour commuter plusieurs modes de commande, un premier desdits modes de commande comprenant l'exécution du procédé de fonctionnement selon l'une quelconque des revendications précédentes, dans lequel au moins un autre mode de commande parmi les modes de commande suivants peut être établi:

5.1 un deuxième mode de commande dans lequel le convertisseur de fréquence (42) fonctionne en continu en mode U/f,
5.2 un troisième mode de commande dans lequel l'exécution des étapes b) et c) est désactivée et le convertisseur de fréquence (42) fonctionne en permanence en mode de commande en boucle fermée de l'étape a).

6. Commande (36) selon la revendication 5, **caractérisée en ce que** le moyen de commutation (58) est configuré pour la sélection des modes de commande via un menu de programme de la commande (36).

7. Dispositif d'entraînement de fermeture de bâtiment ou enceinte (32), comprenant un moyen d'entraînement de fermeture de bâtiment ou enceinte (34) qui comprend un entraînement de fermeture de bâtiment ou enceinte (38) avec un moteur électrique (46), un moyen de détection de paramètre de charge (40) pour détecter un paramètre de charge dépendant d'une charge au niveau de l'entraînement de fermeture de bâtiment ou enceinte (38), et un convertisseur de fréquence (42) pour commander le moteur électrique (46), et une commande (36) selon l'une quelconque des revendications 4 à 6.

8. Fermeture de bâtiment ou enceinte (10), comprenant un vantail (20) mobile pour s'ouvrir et se fermer, un moyen d'équilibrage de poids (18) pour ledit vantail (20), et un dispositif d'entraînement de fermeture de bâtiment ou enceinte (32) selon la revendication 7.

9. Fermeture de bâtiment ou enceinte (10) selon la revendication 8, **caractérisée en ce que**
ladite fermeture est une porte sectionnelle, une porte basculante, une porte roulante ou une porte relevable comprenant comme vantail (20) au moins un vantail de porte qui est au moins partiellement mobile dans une direction verticale, dans laquelle le moyen d'équilibrage de poids (18) comprend au moins un ressort.

10. Programme informatique comprenant des instructions de commande lisibles par machine qui, lorsqu'elles sont chargées dans un dispositif de fermeture de bâtiment ou enceinte (32) selon la revendication 7, amènent le dispositif de fermeture de bâtiment ou enceinte (32) à exécuter le procédé de fonctionnement selon l'une quelconque des revendications 1 à 3.

Fig. 1

Fig. 4

$$Int=\int_0^t (vi - vs)$$

Fig. 2

15

Fig. 3

$Int = \int_0^t (vi - vs)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019007764 A1
- DE 19917831 A1
- WO 2017125257 A1
- DE 102018112439 A1
- DE 102016102703 B3
- US 2015188471 A1
- DE 102010014806 A1

**In der Beschreibung aufgeführte Nicht-Patentliteratur**

- Stand 04.2020 / Druck 04.2020 / HF 84555 DE / PDF. *Rolltore und Rollgitter*, 20 April 2021, www.hoermann.com am
- Stand 04.2018 / Druck 09.2018 / HF 86972 DE / PDF. *Doppel- und Sammelgaragentore*, 20 April 2021, www.hoermann.com
- Stand 04.2019 / Druck 04.2019 / HF 84894 de / G.xx. *Schnelllauftore*, 20 April 2021, www.hoermann.com
- Stand 04.2020 / Druck 04.2020 / HF 86465 DE / PDF. *Industrie-Sektionaltore*, 20 April 2021, www.hoermann.com
- TR10E001-J RE / 06.2016. *Anleitung für Montage, Betrieb und Wartung - Wellenantrieb für Industrie-Sectionaltore*, 20 April 2021, www.hoermann.com
- *Industrieantriebe für Sektionaltor - Wellenantriebe, Steuerungen und Zubehör - Brandschutzmeldung für Feuerschutz-Schiebetore - Ersatzteil-Übersicht - Gültig ab*, 01 March 2020
- *Stand: 03.2020 HF 85609 / PMD12265-09 RE / de*, 20 April 2021, www.hoermann.com
- Frequenzumrichter. *Wikipedia*, 20 March 2021, https://de.wikipedia.org/w/index.php?title=Frequenzumrichter&oldid=209 910364